# EUROPEAN PATENT APPLICATION

(11) **EP 4 436 231 A1**
(43) Date of publication of application: **25.09.2024**
(21) Application number: 22894698.4
(22) Date of filing: 10.11.2022
(51) Int. Cl.: H04W 12/06, H04L 9/40

(54) **AUTHORIZED DATA SCHEDULING METHOD AND APPARATUS, AND NETWORK SIDE DEVICE**

(30) Priority: 16.11.2021 CN 202111355388
(71) Applicant: VIVO MOBILE COMMUNICATION CO., LTD., Dongguan, Guangdong 523863 (CN)
(72) Inventor: CHONG, Weiwei, Dongguan, Guangdong 523863 (CN)
(74) Representative: Murgitroyd & Company
(86) International application number: PCT/CN2022/131064
(87) International publication number: WO 2023/088161

(57) **Abstract**

This application discloses a consent data scheduling method and apparatus, and a network-side device, and pertains to the field of wireless communication technologies. The consent data scheduling method according to embodiments of this application includes: receiving, by a first network element, a data request message sent by a second network element, where the data request message is used for requesting target data, and the target data is related data, of a target user, stored in the first network element or in a data warehouse; and performing, by the first network element, a first operation based on consent information of the target user, where the first operation includes refusing to provide the target data to the second network element or sending the target data to the second network element.

## Description

### CROSS-REFERENCE TO RELATED APPLICATION

This application claims priority to Chinese Patent Application No. 202111355388.3, filed on November 16, 2021, which is incorporated herein by reference in its entirety.

### TECHNICAL FIELD

This application pertains to the field of wireless communication technologies and specifically relates to a consent data scheduling method and apparatus, and a network-side device.

### BACKGROUND

According to the provisions of the general data protection regulation (General Data Protection Regulation, GDPR), personal data of users are personal assets of the users and should not be obtained or used arbitrarily. For example, in a wireless communication system, user-related data generated during wireless network communication (such as data from user terminals, data in service servers, and network data generated in a network by users) are considered personal assets of the users. Therefore, before network elements in the network can obtain or use the data, they need to obtain user consent information from a unified database (such as a unified data management (Unified Data Management, UDM) or a unified data repository (Unified Data Repository, UDR)), and network elements can only obtain or use user data when the user consent information indicates permission for data obtaining or use.

However, taking a data proxy network element as an example, if it has already obtained and stored user-related data, then once other network elements request the user-related data stored by the data proxy network element, there exists a problem that the data proxy network element does not know whether it has the right to share the stored user-related data with other network elements.

### SUMMARY

Embodiments of this application provide a consent data scheduling method and apparatus, and a network-side device, so as to solve the problem that a data proxy network element is unclear about its behavior.

According to a first aspect, a consent data scheduling method is provided, including: receiving, by a first network element, a data request message sent by a second network element, where the data request message is used for requesting target data, and the target data is related data, of a target user, stored in the first network element or in a data warehouse; and performing, by the first network element, a first operation based on consent information of the target user, where the first operation includes refusing to provide the target data to the second network element or sending the target data to the second network element.

According to a second aspect, a consent data scheduling method is provided, including: receiving, by a first network element, a data request message sent by a second network element, where the data request message is used for requesting target data, the data request message includes at least consent information of a target user, and the target data is related data of the target user; and performing, by the first network element, a first operation based on the consent information of the target user, where the first operation includes refusing to provide the target data to the second network element or sending the target data to the second network element.

According to a third aspect, a consent data scheduling method is provided, including: sending, by a second network element, a data request message to a first network element, where the data request message is used for requesting target data, the data request message includes at least consent information of a target user, and the target data is related data of the target user.

According to a fourth aspect, a consent data scheduling apparatus is provided and applied to a first network element, where the apparatus includes: a first transmission module configured to receive a data request message sent by a second network element, where the data request message is used for requesting target data, and the target data is related data, of a target user, stored in the first network element or in a data warehouse; and a first execution module configured to perform a first operation based on consent information of the target user, where the first operation includes refusing to provide the target data to the second network element or sending the target data to the second network element.

According to a fifth aspect, a consent data scheduling apparatus is provided and applied to a first network element, where the apparatus includes: a second transmission module configured to receive a data request message sent by a second network element, where the data request message is used for requesting target data, the data request message includes at least consent information of a target user, and the target data is related data of the target user; and a second execution module configured to perform a first operation based on the consent information of the target user, where the first operation includes refusing to provide the target data to the second network element or sending the target data to the second network element.

According to a sixth aspect, a consent data scheduling apparatus is provided and applied to a second network element, where the apparatus includes a third transmission module configured to send a data request message to a first network element, where the data request message is used for requesting target data, the data request message includes at least consent information of a target user, and the target data is related data of the target user.

According to a seventh aspect, a network-side device is provided, where the terminal includes a processor, a memory, and a program or instructions stored in the memory and executable on the processor, and when the program or instructions are executed by the processor, the steps of the method according to the first aspect, second aspect, or third aspect are implemented.

According to an eighth aspect, a network-side device is provided, including a processor and a communication interface, where the communication interface is coupled to the processor, and the processor is configured to run a program or instructions to implement the steps of the method according to the first aspect or the steps of the method according to the third aspect.

According to a ninth aspect, a readable storage medium is provided, where a program or instructions are stored in the readable storage medium, and when the program or instructions are executed by a processor, the steps of the method according to the first aspect, the steps of the method according to the second aspect, or the steps of the method according to the third aspect are implemented.

According to a tenth aspect, a chip is provided, where the chip includes a processor and a communication interface, the communication interface is coupled to the processor, and the processor is configured to run a program or instructions to implement the steps of the method according to the first aspect, the steps of the method according to the second aspect, or the steps of the method according to the third aspect.

According to an eleventh aspect, a computer program product or program product is provided, where the computer program or program product is stored in a non-transient storage medium, and the computer program or program product is executed by at least one processor so as to implement the steps of the method according to the first aspect, the steps of the method according to the second aspect, or the steps of the method according to the third aspect.

In the embodiments of this application, the first network element, before sharing user-related data it has already stored with the second network element, needs to determine, based on the user consent information, whether the user-related data can be shared, thereby not only making the first network element clear about its own behavior but also ensuring the security of user data, thus making the network more compliant.

### BRIEF DESCRIPTION OF DRAWINGS

FIG. 1a is a schematic structural diagram of a wireless communication system according to an example embodiment of this application;
FIG. 1b is a schematic structural diagram of a consent data scheduling system according to an example embodiment of this application;
FIG. 2 is a first schematic flowchart of a consent data scheduling method according to an example embodiment of this application;
FIG. 3 is a second schematic flowchart of a consent data scheduling method according to an example embodiment of this application;
FIG. 4 is a first schematic flowchart of interaction of a consent data scheduling method according to an example embodiment of this application;
FIG. 5 is a third schematic flowchart of a consent data scheduling method according to an example embodiment of this application;
FIG. 6 is a fourth schematic flowchart of a consent data scheduling method according to an example embodiment of this application;
FIG. 7 is a second schematic flowchart of interaction of a consent data scheduling method according to an example embodiment of this application;
FIG. 8 is a first schematic structural diagram of a consent data scheduling apparatus according to an example embodiment of this application;
FIG. 9 is a second schematic structural diagram of a consent data scheduling apparatus according to an example embodiment of this application;
FIG. 10 is a third schematic structural diagram of a consent data scheduling apparatus according to an example embodiment of this application; and
FIG. 11 is a schematic structural diagram of a network-side device according to an example embodiment of this application.

### DESCRIPTION OF EMBODIMENTS

The following clearly describes technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in the specification and claims of this application are used to distinguish between similar objects rather than to describe a specific order or sequence. It should be understood that the terms used in this way are interchangeable in appropriate circumstances such that the embodiments of this application can be implemented in other orders than the order illustrated or described herein. In addition, objects distinguished by "first" and "second" are generally of a same type, and the quantities of the objects are not limited. For example, there may be one or more first objects. In addition, in this specification and claims, "and/or" indicates at least one of the connected objects, and the character "/" generally indicates an "or" relationship between the contextually associated objects.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technologies described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than the NR system application, for example, to the 6th generation (6th Generation, 6G) communication system.

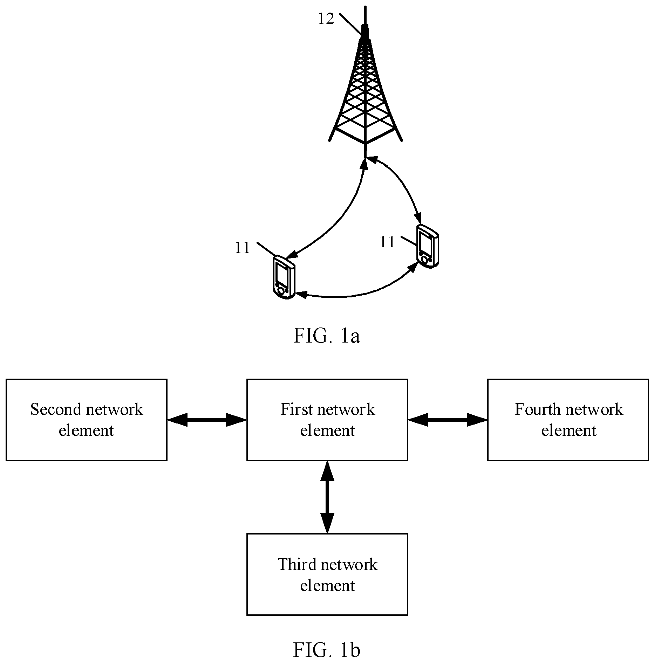

FIG. 1a is a schematic structural diagram of a wireless communication system to which embodiments of this application are applicable. The wireless communication system includes a terminal 11 and a network-side device 12. The terminal 11 may also be referred to as a terminal device or user equipment (User Equipment, UE). The terminal 11 may be a terminal-side device such as a mobile phone, a tablet personal computer (Tablet Personal Computer), a laptop computer (Laptop Computer) or notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device), vehicular user equipment (VUE), or pedestrian user equipment (PUE). The wearable device includes a smart watch, a wrist band, earphones, glasses, or the like. It should be noted that the specific type of the terminal 11 is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a Node B, an evolved node B (eNB), a home NodeB, a home evolved NodeB, a WLAN access point, a Wi-Fi node, a transmission reception point (Transmitting Receiving Point, TRP), or other appropriate terms in the art. Provided that the same technical effects are achieved, the base station is not limited to any specific technical term. It should be noted that in the embodiments of this application, only the base station in the NR system is used as an example, although the specific type of the base station is not limited.

Based on the foregoing wireless communication system, as shown in FIG. 1b, a schematic structural diagram of a consent data scheduling system is provided according to an example embodiment of this application. The scheduling system may include a first network element, a second network element, a third network element, and a fourth network element.

The first network element may be a network element or data proxy element that stores (or saves or caches) one or more pieces of user-related data (such as user historical data), for example, a network data analytics function (Network Data Analytics Function, NWDAF), a data collection coordination function (Data Collection Coordination Function, DCCF), an analytics data repository function (Analytics Data Repository Function, ADRF), or other functional network elements within a network such as an access and mobility management function (Access and Mobility Management Function, AMF), or a session management function (Session Management Function, SMF). The DCCF and NWDAF can provide data management (data management) services, the AMF is used to store mobility management data related to UE, and the SMF is used to store session management data related to UE.

The second network element is a network element or entity that needs to obtain user-related data (such as user historical data), and the purpose or objective for obtaining user-related data is determined by the second network element based on different communication scenarios. For example, when the second network element is an NWDAF, the purpose or objective of obtaining user-related data by the second network element may be: to use the data as input data for training a particular AI model (identified by an analytic ID). For another example, when the second network element is a 5GC NF (such as a policy control function (Policy Control Function, PCF), an AMF, or an application function (Application Function, AF)), the purpose or objective of obtaining user-related data may be: to analyze the obtained user historical data as reference information for executing a particular policy decision, for example, the PCF obtaining user equipment historical mobility analytics (UE historical mobility analytics) and user equipment historical service behavior analytics (UE historical service behavior analytics) generated by the first network element (such as NWDAF), for generating a more suitable network camping policy (RFSP index) for UE.

It should be noted that the second network element can also be understood as a data consumer (Data consumer).

The third network element is a network element that stores at least one piece of user consent information (user consent information), for example, a UDM and a UDR. In other words, consent information of each user can be stored in the UDM or the UDR as part of subscription data of the user.

The fourth network element is a network element in the network that can provide (one or more pieces of) user-related data (such as user historical data), for example, an AMF, a radio access network (Radio Access Network, RAN), an SMF, or an NWDAF. The AMF or the RAN can provide data related to UE mobility (UE mobility), the SMF can provide data related to protocol data unit session (Protocol Data Unit session, PDU session), and the NWDAF can provide a particular data analytics result (such as a user service behavior analytics result).

It can be understood that the fourth network element can also be understood as a data source (Data Source), a data warehouse, or the like. This is not limited herein.

Based on FIGs. 1a and 1b, the following describes in detail the technical solutions provided in the embodiments of this application through some embodiments and application scenarios thereof with reference to the accompanying drawings.

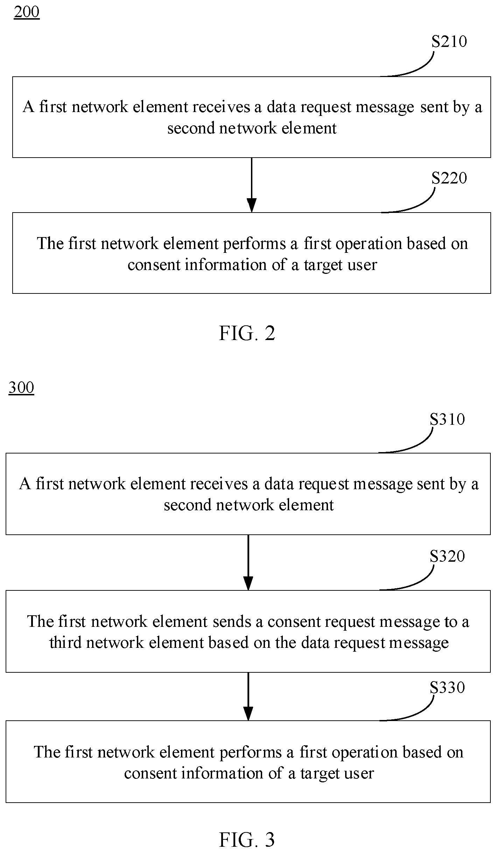

FIG. 2 is a schematic flowchart of a consent data scheduling method 200 according to an example embodiment of this application. The method 200 may, but is not limited to, be executed by a first network element, specifically by hardware and/or software installed on the first network element. In this embodiment, the method 200 may include at least the following steps.

S210. The first network element receives a data request message sent by a second network element.

The data request message is used for requesting target data, and the target data is related data, of a target user, stored in the first network element or in a data warehouse.

For example, the target data may be user historical data related to the target user that the first network element has already obtained and stored in the first network element or in a data warehouse. This is not limited herein.

In view of this, the data request message may include at least one of the following (11) to (17).
(11) Type information of the target data. The type information of the target data may be type information classified based on data function, type information classified based on data size, or type information classified based on data generation time. This is not limited in this embodiment.
(12) Identification information of the target data. The identification information may be one or more event IDs (event IDs), one or more analytics IDs (analytics IDs), or the like.
(13) Identification information of at least one terminal device (UE ID) for identifying that the target user is a user corresponding to the identification information of the at least one terminal device, meaning that the target data requested by the second network element is for one or more target users identified by the UE ID.
(14) Area information for identifying that the target user is a user located in an area corresponding to the area information, meaning that the target data requested by the second network element is for one or more target users identified by area.

It should be understood that (13) and (14) correspond to different user granularities. For example, when the data request message includes the identification information of at least one terminal device as described in (13), the target data is related data of the user(s) corresponding to the identification information of at least one terminal device. For another example, when the data request message includes the area information as described in (14), the target data is related data of each user in the area corresponding to the area information.
(15) Second time for indicating that the target data is data generated within the second time. In general cases, the second time may be a historical time, meaning that the target data that the second network element can obtain using the data request message is user historical data generated within the second time.
(16) Third time for indicating a time when the first network element feeds back the target data, meaning that the first network element feeds back the target data requested by the second network element within the third time.

The second time is later than the first time, or the second time is after the first time.

(17) Purpose information (or objective information) of obtaining the target data by the second network element. The purpose information may be determined by the second network element based on a communication scenario, for example, model training, inference task, or generating a data analytics result for a particular analytics ID.

It should be noted that which of the foregoing (11) to (17) are included in the data request information can be implemented through protocol prescription, higher-layer configuration, or network-side configuration. This is not limited herein.

S220. The first network element performs a first operation based on consent information of the target user.

The first operation includes refusing (which can also be understood as stopping or canceling) to provide the target data to the second network element or sending the target data to the second network element.

For example, in a case that the consent information of the target user indicates that the target user disagrees with data sharing for the target data, the first network element refuses to provide the target data to the second network element. For another example, in a case that the consent information of the target user indicates that the target user agrees with data sharing for the target data, the first network element sends the target data to the second network element.

Optionally, the consent information of the target user may be obtained by the first network element from a third network element, or may be selected from consent information of one or more users cached by the first network element. This is not limited in this embodiment.

In addition, the consent information of one or more users cached by the first network element can be understood as having been obtained by the first network element from the third network element in the past (which may be a time before the first network element receives the data request information). For example, in the past, the first network element (for example, an NWDAF) may have obtained the consent information of the related user from the third network element for other reasons (for example, for the need for model training or data inference by the first network element).

Furthermore, for the scenario in which the first network element determines, based on the consent information of the target user, to send the target data to the second network element, if the target data is the related data, of the target user, stored in the first network element, the first network element obtains the target data from itself and sends the target data to the second network element. The target data stored in the first network element can be understood as: before performing the foregoing step S210, the first network element has already obtained related data of the target user from the data warehouse (for example, a data source) for some needs of the first network element or other network elements, that is, the target data. For example, the first network element (for example, an NWDAF) may have obtained location data of particular UE from the data warehouse (for example, an AMF) as training input data for the need of training a UE mobility trajectory model by the first network element.

In addition, if the target data is the related data, of the target user, stored in a data warehouse, in a case that the first network element has determined, based on the consent information of the target user, to send the target data to the second network element, the first network element can send a data obtaining request message to the data warehouse to obtain the target data. Optionally, the data obtaining request message can be determined based on the data request message, for example, may include type information of the target data, identification information of the target data, identification information of at least one terminal device, and the like.

In this embodiment, the first network element, before sharing user-related data it has already stored with the second network element, can determine, based on the user consent information, whether the user-related data can be shared, thereby not only making the first network element clear about its own behavior but also ensuring the security of user data, thus making the network more compliant.

FIG. 3 is a schematic flowchart of a consent data scheduling method 300 according to an example embodiment of this application. The method 300 may, but is not limited to, be executed by a first network element, specifically by hardware and/or software installed on the first network element. In this embodiment, the method 300 may include at least the following steps.

S310. The first network element receives a data request message sent by a second network element.

The data request message is used for requesting target data, and the target data is related data, of a target user, stored in the first network element or in a data warehouse.

It can be understood that for the implementation process of S310, reference may be made to the related description in the foregoing method embodiment 200. To avoid repetition, details are not repeated herein.

S320. The first network element sends a consent request message to a third network element based on the data request message.

The consent request message is used for obtaining consent information of the target user. Optionally, the consent request message may be Nudm_SDM_Get.

In an implementation, the consent request message may include at least one of the following (21) to (27).
(21) At least one piece of identification information for indicating obtaining of the consent information of the target user corresponding to the identification information.
(22) Requested user consent type information, where the user consent type includes at least data sharing.

In an implementation, the consent information of the user may be divided into different types or ranges, for example, whether to consent to data obtaining, whether to consent to data usage, whether to consent to data sharing, and whether to consent to data processing.

In addition, the requested user consent type information may be obtained from the received data request message.
(23) First time for indicating that the target data is data generated within the first time. To be specific, the first time is the generation time of the target data, generally a historical time, meaning that the consent information of the target user is consent information corresponding to historical data.
(24) Purpose information (or objective information) of obtaining the target data by the second network element. The purpose information of the target data may be obtained by the first network element from the data request message sent by the second network element to indicate the ultimate objective or purpose of obtaining the target data by the second network element.
(25) First information for indicating a consent usage range, allowing the target user to determine, based on the first information, whether to consent to the usage range.
(26) Second information for indicating a consent usage time, allowing the target user to determine, based on the second information, whether to consent to the usage time.
(27) Third information for indicating a consent storage time, allowing the target user to determine, based on the third information, whether to consent to the storage time.

It should be noted that which of the foregoing (21) to (27) are included in the consent request message can be implemented through protocol prescription, higher-layer configuration, or network-side configuration. This is not limited herein.

Further, after receiving the consent request message sent by the first network element, the third network element can determine, based on the information included in the consent request message, whether to authorize the first network element to share the target data with the second network element and feed back the consent information of the target user to the first network element. The consent information of the target user may include at least agree information or disagree information, where "agree information" indicates that the target user allows the first network element to share the target data with the second network element; and "disagree information" indicates that the target user does not allow the first network element to share the target data with the second network element.

Certainly, the information included in the consent information of the target user can be determined based on the information included in the consent request information. In an implementation, the consent information of the target user may include at least one of the following (31) to (34).
(31) Fourth information for indicating whether the target user agrees or disagrees with data sharing.
(32) Fifth information for indicating a consent usage range, meaning that the target user agrees that the second network element can use the target data within the consent usage range. Optionally, the consent usage range may be one or more of the purpose, object, area, and the like of consented usage.
(33) Sixth information for indicating a consent usage time, meaning that the target user agrees that the second network element can use the target data within the consent usage time.
(34) Seventh information for indicating a consent storage time, meaning that the target user agrees that the second network element can use the target data within the consent storage time.

In other words, for the foregoing (32) to (34), when the consent usage range, consent usage time, or consent storage time is exceeded, the second network element is not allowed to continue using/storing the target data, for example, the second network element can delete the target data.

Additionally, it can be understood that in a case that the fourth information indicates that the target user agrees with data sharing, the consent information of the target user may include at least one of the fifth information, sixth information, and seventh information; otherwise, the consent information of the target user may include only the fourth information. This is not limited in this application.

S330. The first network element performs a first operation based on the consent information of the target user.

The first operation includes refusing to provide the target data to the second network element or sending the target data to the second network element.

It can be understood that for the implementation process of S330, in addition to reference to the relevant description in the foregoing method embodiment 200, in a possible implementation, in a case that the consent information of the target user indicates that the target user disagrees with data sharing for the target data, the first network element can refuse or stop provision of the target data to the second network element and send a first response message to the second network element. The first response message is used to at least indicate to the second network element that the first network element refuses or stops provision of the target data.

Optionally, the first response message includes at least one of the following (41) to (44).

(41) Eighth information for indicating that the first network element refuses or stops provision of the target data to the second network element. It can be understood that the eighth information is refusal/error indication information for indicating failure of obtaining the target data.

(42) Ninth information for indicating a reason why the first network element refuses or stops provision of the target data. For example, the target user does not consent data sharing (that is, the target user does not allow the first network element to share the already obtained or stored target data with the second network element).

(43) Tenth information for indicating the second network element to cancel or delete a subscription request for the target data.

It can be understood that the data request message sent by the second network element may be a persistent subscription message or a non-persistent subscription message (that is, a message for single obtaining of data), and then, in a case that the data request message sent by the second network element is a persistent subscription message, the first response message may include the tenth information to indicate the second network element to cancel or delete the subscription request for the target data.

(44) Eleventh information for indicating a waiting time before the second network element requests for the target data from the first network element again, to guide the second network element to attempt to obtain the target data from the first network element again after the waiting time.

For example, if the data request message is a data subscription message and the first network element has already accepted the data subscription message and provided the related data, then, when the first network element determines that the consent information of the target user for data sharing is disagree information, the first response message sent by the first network element to the second network element may be a notification message, and the eighth information included therein is used to notify the second network element that the first network element will no longer continue to provide the target data of the target user, the ninth information is that the target user no longer consents data sharing (meaning that the target user does not allow the first network element to share the already obtained or stored data with the second network element), and the tenth information is a cancellation of subscription indication message for requiring the second network element to cancel the data subscription for the target user.

In another possible implementation, in a case that the consent information of the target user indicates that the target user agrees with data sharing for the target data, the first network element sends a second response message to the second network element; where the second response message includes at least the target data, and the target data may be data stored by the first network element itself, or data stored in a data warehouse.

Optionally, the second response message further includes at least one of the following (51) to (53).
(51) Twelfth information for indicating a consent usage range, meaning that the target user agrees that the second network element can use the target data within the consent usage range.
(52) Thirteenth information for indicating a consent usage time, meaning that the target user agrees that the second network element can use the target data within the consent usage time.
(53) Fourteenth information for indicating a consent storage time, meaning that the target user agrees that the second network element can use the target data within the consent storage time.

It can be understood that when the consent usage range, consent usage time, or consent storage time is exceeded, the second network element is not allowed to continue using/storing the target data, for example, the second network element can delete the target data.

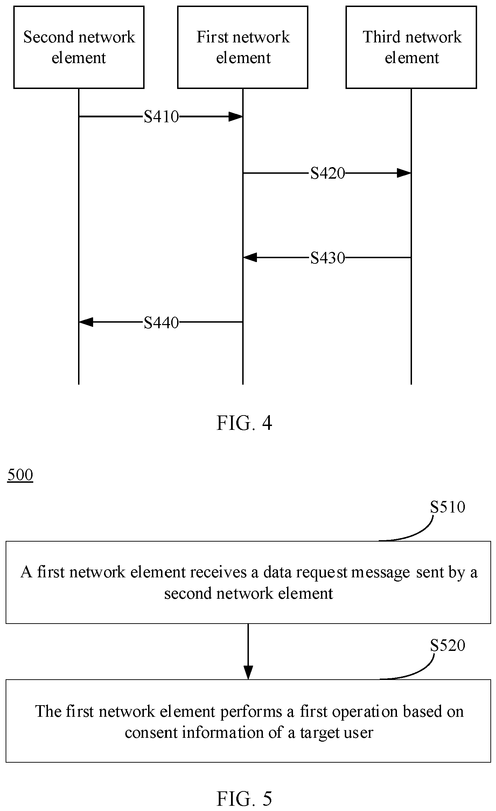

Based on the description in the foregoing method embodiments 200 and 300, the implementation processes of the foregoing method embodiments 200 and 300 are illustrated in examples again with reference to FIG. 4 as follows. It is assumed that the target data is related data, of the target user, stored in the first network element.

S410. The second network element sends a data request message to the first network element.

S420. The first network element sends a consent request message to the third network element based on the data request message.

S430. The third network element feeds back consent information of the target user to the first network element based on the consent request message.

S440. In a case that the consent information of the target user indicates that the target user disagrees with sharing the target data with the second network element, the first network element feeds back a first response message to the second network element.

Alternatively, in a case that the consent information of the target user indicates that the target user agrees with sharing the target data stored therein or in a data warehouse with the second network element, the first network element feeds back a second response message to the second network element.

It can be understood that for the implementation process of the consent data scheduling method 400 provided in this embodiment, reference may be made to the related description in the foregoing method embodiments 200 and/or 300, with the same or corresponding technical effects achieved. To avoid repetition, details are not be repeated herein.

In addition, the consent data scheduling method 400 provided in this embodiment may include but is not limited to the foregoing steps S410 to S440, for example, including more or fewer steps than S410 to S440. This is not limited in this embodiment.

FIG. 5 is a schematic flowchart of a consent data scheduling method 500 according to an example embodiment of this application. The method 500 may, but is not limited to, be executed by a first network element, specifically by hardware and/or software installed on the first network element. In this embodiment, the method 500 may include at least the following steps.

S510. The first network element receives a data request message sent by a second network element.

The data request message is used for requesting target data, the data request message includes at least consent information of a target user, and the target data is related data of the target user.

It can be understood that the consent information of the target user may be whether the target user agrees with data processing for related data of the target user, for example, data obtaining, data usage, data sharing, and data storage, allowing the first network element to determine, based on the consent information of the target user, whether the target user agrees with data obtaining, data usage, data sharing, data storage, and the like for the related data of the target user (for example, the target data), so as to avoid exchange of already obtained user consent information between different network elements, thereby avoiding repeated detection and reducing signaling overheads.

Optionally, the consent information of the target user may have been obtained by the second network element from the third network element in advance before the second network element sends a data obtaining request, or may be pre-configured in the second network element through protocol prescription or the like. This is not limited in this application.

Certainly, in a possible implementation, in addition to the consent information of the target user, the data request message may further include at least one of the following (61) to (67).
(61) Type information of the target data. The type information of the target data may be type information classified based on data function, type information classified based on data size, data generation time, or type information classified based on data generation event. This is not limited in this embodiment.
(62) Identification information of the target data. The identification information may be one or more event IDs (event IDs), one or more analytics IDs (analytics IDs), or the like.
(63) Identification information of at least one terminal device (UE ID) for identifying that the target user is a user corresponding to the identification information of at least one terminal device, meaning that the target data requested by the second network element is for one or more target users identified by UE ID.
(64) Area information for identifying that the target user is a user located in an area corresponding to the area information, meaning that the target data requested by the second network element is for one or more target users identified by area.

It should be understood that (63) and (64) correspond to different user granularities. For example, when the data request message includes the identification information of at least one terminal device as described in (63), the target data is related data of the user(s) corresponding to the identification information of at least one terminal device. For another example, when the data request message includes the area information as described in (64), the target data is related data of each user in the area corresponding to the area information.
(65) Second time for indicating that the target data is data generated within the second time. In general cases, the second time may be a historical time, meaning that the target data that the second network element has obtained using the data request message is user historical data generated within the second time.
(66) Third time for indicating a time when the first network element feeds back the target data, meaning that the first network element feeds back the target data requested by the second network element within the third time.

The second time is later than the first time, or the second time is after the first time.

(67) Purpose information (or objective information) of obtaining the target data by the second network element. The purpose information may be determined by the second network element based on a communication scenario, for example, model training, inference task, or generating a data analytics result for a particular analytics ID.

It should be noted that which of the foregoing (66) to (67) are included in the data request information can be implemented through protocol prescription, higher-layer configuration, or network-side configuration. This is not limited herein.

S520. The first network element performs a first operation based on the consent information of the target user, where the first operation includes refusing to provide the target data to the second network element or sending the target data to the second network element.

The first operation includes refusing (which can also be understood as stopping or canceling) to provide the target data to the second network element or sending the target data to the second network element. For example, in a case that the consent information of the target user indicates that the target user disagrees with data processing for the target data, the first network element refuses to provide the target data to the second network element. For another example, in a case that the consent information of the target user indicates that the target user agrees with data processing for the target data, the first network element sends the target data to the second network element.

Furthermore, for the scenario in which the first network element determines, based on the consent information of the target user, to send the target data to the second network element, the target data may be the related data, of the target user, stored in the first network element or in a data warehouse, or data that the first network element obtains instantly (or in real time) from a data warehouse (for example, an AMF).

It can be understood that the target data stored in the first network element can be understood as: before performing the foregoing step S510, the first network element has already obtained related data of the target user from the data warehouse (for example, a data source) for some needs of the first network element or other network elements, that is, the target data. For example, the first network element (for example, an NWDAF) may have obtained location data of particular UE from the data warehouse (for example, an AMF) as training input data for the need of training a UE mobility trajectory model by the first network element.

The target data that the first network element has obtained instantly (or in real time) from a data source, data warehouse, or the like, can be understood as: in a case that the consent information of the target user indicates that the target user agrees with data processing (for example, data obtaining, data usage, data sharing, and data storage) for the target data, the first network element sends a data obtaining request message to the data warehouse to obtain the target data. For example, the first network element sends a data obtaining request message to an AMF to obtain the requested terminal device location (UE location) data.

Optionally, the data obtaining request message can be determined based on the data request message, for example, may include type information of the target data, identification information of the target data, identification information of at least one terminal device, and the like.

In this embodiment, the consent information of the target user being included in the data request message sent by the second network element allows for the first network element to determine, based on the consent information of the target user, whether the target user agrees with data processing such as data obtaining, data usage, data sharing, and data storage for the related data of the target user (for example, the target data). This not only avoids the problem of the need for exchange of already obtained user consent information between different network elements but also achieves the purpose of avoiding repeated detection and reducing signaling overheads.

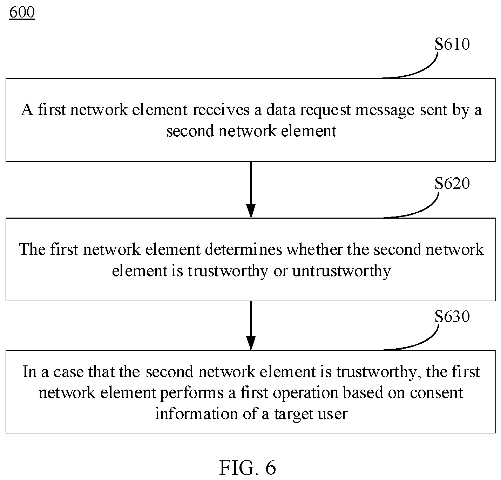

FIG. 6 is a schematic flowchart of a consent data scheduling method 600 according to an example embodiment of this application. The method 600 may, but is not limited to, be executed by a first network element, specifically by hardware and/or software installed on the first network element. In this embodiment, the method 600 may include at least the following steps.

S610. The first network element receives a data request message sent by a second network element.

The data request message is used for requesting target data, the data request message includes at least consent information of a target user, and the target data is related data of the target user.

It can be understood that for the implementation process of S610, reference may be made to the related description in the method embodiment 500. In a possible implementation, the consent information of the target user further includes at least one of the following (71) to (74).
(71) Fifteenth information for indicating whether the target user agrees or disagrees with data processing, where the data processing includes at least one of data obtaining, data usage, data storage, and data sharing.
(72) Sixteenth information for indicating a consent usage range, meaning that the target user agrees that the second network element can use the target data within the consent usage range. Optionally, the consent usage range may be one or more of the purpose, object, area, and the like of consented usage.
(73) Seventeenth information for indicating a consent usage time, meaning that the target user agrees that the second network element can use the target data within the consent usage time.
(74) Eighteenth information for indicating a consent storage time, meaning that the target user agrees that the second network element can use the target data within the consent storage time.

In other words, for the foregoing (72) to (74), when the consent usage range, consent usage time, or consent storage time is exceeded, the second network element is not allowed to continue using/storing the target data, for example, the second network element can delete the target data.

S620. The first network element determines whether the second network element is trustworthy or untrustworthy.

In a case that the second network element is trustworthy, S630 is performed. It should be noted that after the first network element receives the data request message, it may be considered by default that the first network element performs the first operation according to the consent information of the target data included in the data request message, or as described in S620, the first network element first determines whether the second network element is trustworthy or untrustworthy, and in the case that the second network element is trustworthy, proceed to S630. This is not limited in this embodiment.

In a case that the second network element is untrustworthy, the first network element ignores the consent information of the target user included in the data request message and re-obtains consent information of the target user from a third network element; or the first network element refuses the data request message and sends a third response message to the second network element, where the third response message includes at least a reason why the first network element refuses the data request message, for example, the consent information of the target user included in the data request message is different or untrustworthy.

In view of this, in an implementation, in the case that the first network element determines that the second network element is trustworthy, the first network element can set the second network element as a trustworthy network element, so that in subsequent reception of a data request message sent by the second network element, the first network element may not perform consent confirmation, and proceed to S610.

Alternatively, in the case that the first network element determines that the second network element is untrustworthy, the first network element can set the second network element as an untrustworthy network element, so that in subsequent reception of a data request message sent by the second network element, regardless of whether consent information from the target user is included therein, the first network element ignores this consent information and always obtains consent information of the target user from the third network element.

Optionally, the first network element can determine whether the second network element is trustworthy or untrustworthy based on a secure priority process. For example, the first network element obtains the consent information of the target user from the third network element, then determines whether the consent information of the target user included in the data request message matches the consent information of the target user obtained from the third network element; and in a case of match (for example, content in the information are the same), determines that the second network element is trustworthy; or in a case of mismatch (for example, content in the information are different), determines that the second network element is untrustworthy and the first network element refuses the data request message from the second network element.

In addition, for the foregoing description, when obtaining the consent information of the target user from the third network element, the first network element can send a consent request message to the third network element based on the data request message. Optionally, the consent request message may be Nudm_SDM_Get.

In an implementation, the consent request message may include at least one of the following (81) to (87).
(81) At least one piece of identification information for indicating obtaining of the consent information of the target user corresponding to the identification information.
(82) Requested user consent type information. In an implementation, the consent information of the user can be subdivided into different types or ranges, for example, whether to consent to data obtaining, whether to consent to data usage, whether to consent to data sharing, and whether to consent to data storage.

Optionally, the requested user consent type information may be obtained from the received data request message.
(83) First time for indicating that the target data is data generated within the first time. To be specific, the first time is the generation time of the target data, generally a historical time, meaning that the consent information of the target user is consent information corresponding to historical data.
(84) Purpose information (or objective information) of obtaining the target data by the second network element. The purpose information of the target data may be obtained by the first network element from the data request message sent by the second network element to indicate the ultimate objective or purpose of obtaining the target data by the second network element.
(85) First information for indicating a consent usage range, allowing the third network element to determine, based on the first information, whether to consent to the usage range.
(86) Second information for indicating a consent usage time, allowing the third network element to determine, based on the second information, whether to consent to the usage time.
(87) Third information for indicating a consent storage time, allowing the third network element to determine, based on the third information, whether to consent to the storage time.

It should be noted that which of the foregoing (81) to (87) are included in the consent request message can be implemented through protocol prescription, higher-layer configuration, or network-side configuration. This is not limited herein.

Further, after receiving the consent request message sent by the first network element, the third network element can determine, based on the information included in the consent request message, whether to consent to data processing for the target data by the first network element and feed back the consent information of the target user to the first network element. The consent information of the target user may include at least agree information or disagree information, where "agree information" indicates that the target user allows data processing for the target data by the first network element; and "disagree information" indicates that the target user does not allow data processing for the target data by the first network element. Optionally, the aforementioned data processing includes data usage, data sharing, data storage, data obtaining, and the like.

S630. The first network element performs a first operation based on the consent information of the target user.

The first operation includes refusing to provide the target data to the second network element or sending the target data to the second network element.

It can be understood that for the implementation process of S630, in addition to reference to the relevant description in the foregoing method embodiment 500, in a possible implementation, in a case that the consent information of the target user indicates that the target user disagrees with data processing for the target data, the first network element can refuse or stop provision of the target data to the second network element and send a fourth response message to the second network element. The fourth response message is used to at least indicate to the second network element that the first network element refuses or stops provision of the target data.

Optionally, the fourth response message includes at least one of the following (91) to (94).
(91) Nineteenth information for indicating that the first network element refuses or stops provision of the target data to the second network element. It can be understood that the eighth information is refusal/error indication information for indicating failure of obtaining the target data.
(92) Twentieth information for indicating a reason why the first network element refuses or stops provision of the target data, for example, the target user does not consent data processing.
(93) Twenty-first information for indicating the second network element to cancel or delete a subscription request for the target data.

It can be understood that the data request message sent by the second network element may be a persistent subscription message or a non-persistent subscription message (that is, a message for single obtaining of data), and then, in a case that the data request message sent by the second network element is a persistent subscription message, the first response message may include the tenth information to indicate the second network element to cancel or delete the subscription request for the target data.

(94) Twenty-second information for indicating a waiting time before the second network element requests for the target data from the first network element again, to guide the second network element to attempt to obtain the target data from the first network element again after the waiting time.

In another implementation, in a case that the consent information of the target user indicates that the target user agrees with data processing for the target data, the first network element obtains the target data and sends a fifth response message to the second network element. The fifth response message includes at least the target data, and the target data may be data stored by the first network element itself, data stored in a data warehouse, or data that the first network element obtains instantly from a data warehouse (for example, an AMF).

Optionally, the fifth response message includes at least one of the following (101) to (103).
(101) Twenty-third information for indicating a consent usage range, meaning that the target user agrees that the second network element can use the target data within the consent usage range.
(102) Twenty-fourth information for indicating a consent usage time, meaning that the target user agrees that the second network element can use the target data within the consent usage time.
(103) Twenty-fifth information for indicating a consent storage time, meaning that the target user agrees that the second network element can use the target data within the consent storage time.

It can be understood that when the consent usage range, consent usage time, or consent storage time is exceeded, the second network element is not allowed to continue using/storing the target data, for example, the second network element can delete the target data.

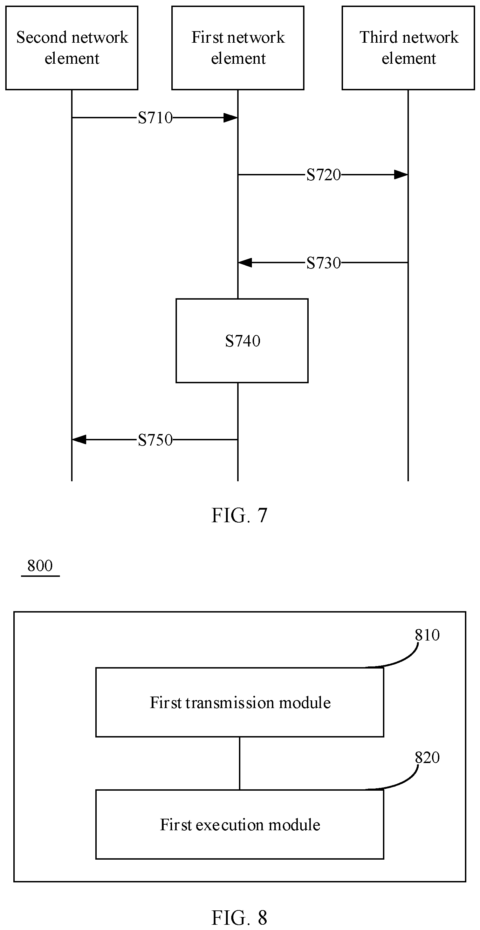

Based on the description in the foregoing method embodiments 500 and 600, the implementation processes of the foregoing method embodiments 500 and 600 are illustrated in examples again with reference to FIG. 7 as follows. It is assumed that the target data is related data, of the target user, stored in the first network element.

S710. The second network element sends a data request message to the first network element, where the data request message includes at least the consent information of the target user.

S720. The first network element sends a consent request message to the third network element based on the data request message.

S730. The third network element feeds back consent information of the target user to the first network element based on the consent request message.

S740. The first network element determines whether the second network element is trustworthy or untrustworthy based on the consent information of the target user fed back by the third network element and the consent information of the target user included in the data request message.

S750. In a case that the second network element is trustworthy but the consent information of the target user indicates that the target user disagrees with processing the target data with the second network element, the first network element feeds back a fourth response message to the second network element.

Alternatively, in a case that the second network element is trustworthy and the consent information of the target user indicates that the target user agrees with processing the target data with the second network element, the first network element feeds back a fifth response message to the second network element.

Alternatively, in a case that the second network element is untrustworthy, the first network element feeds back a third response message to the second network element to indicate that the first network element refuses the data request message.

It can be understood that for the implementation process of the consent data scheduling method 700 provided in this embodiment, reference may be made to the related description in the foregoing method embodiments 500 and/or 600, with the same or corresponding technical effects achieved. To avoid repetition, details are not be repeated herein.

In addition, the consent data scheduling method 700 provided in this embodiment may include but is not limited to the foregoing steps S710 to S750, for example, including more or fewer steps than S710 to S750. This is not limited in this embodiment.

It should be noted that the consent data scheduling methods 200 to 700 according to the embodiments of this application may be executed by a consent data scheduling apparatus or a control module for executing the consent data scheduling methods 200 to 700 in the consent data scheduling apparatus. In embodiments of this application, the consent data scheduling methods 200 to 700 being executed by the consent data scheduling apparatus is used as an example to describe the consent data scheduling apparatus according to the embodiments of this application.

FIG. 8 is a schematic structural diagram of a consent data scheduling apparatus 800 according to an example embodiment of this application. The apparatus 800 includes: a first transmission module 810 configured to receive a data request message sent by a second network element, where the data request message is used for requesting target data, and the target data is related data, of a target user, stored in a first network element or in a data warehouse; and a first execution module 820 configured to perform a first operation based on consent information of the target user, where the first operation includes refusing to provide the target data to the second network element or sending the target data to the second network element.

Optionally, the first transmission module 810 is further configured to send a consent request message to a third network element based on the data request message, where the consent request message is used for obtaining the consent information of the target user.

Optionally, the consent request message includes at least one of the following: at least one piece of identification information for indicating obtaining of the consent information of the target user corresponding to the identification information; requested user consent type information, where the user consent type includes at least data sharing; first time for indicating that the target data is data generated within the first time; purpose information of obtaining the target data by the second network element; first information for indicating a consent usage range; second information for indicating a consent usage time; and third information for indicating a consent storage time.

Optionally, the consent information of the target user includes at least one of the following: fourth information for indicating whether the target user agrees or disagrees with data sharing; fifth information for indicating a consent usage range; sixth information for indicating a consent usage time; and seventh information for indicating a consent storage time.

Optionally, the first execution module 820 is configured to: in a case that the consent information of the target user indicates that the target user disagrees with data sharing for the target data, send a first response message to the second network element; where the first response message is used to at least indicate to the second network element that the first network element refuses or stops provision of the target data.

Optionally, the first response message includes at least one of the following: eighth information for indicating that the first network element refuses or stops provision of the target data to the second network element; ninth information for indicating a reason why the first network element refuses or stops provision of the target data; tenth information for indicating the second network element to cancel or delete a subscription request for the target data; and eleventh information for indicating a waiting time before the second network element requests for the target data from the first network element again.

Optionally, the first execution module 820 is further configured to: in a case that the consent information of the target user indicates that the target user agrees with data sharing for the target data, send a second response message to the second network element; where the second response message includes at least the target data.

Optionally, the second response message further includes at least one of the following: twelfth information for indicating a consent usage range; thirteenth information for indicating a consent usage time; and fourteenth information for indicating a consent storage time.

Optionally, the first transmission module 810 is further configured to: in a case that the target data is related data, of the target user, stored in a data warehouse, obtain the target data stored in the data warehouse.

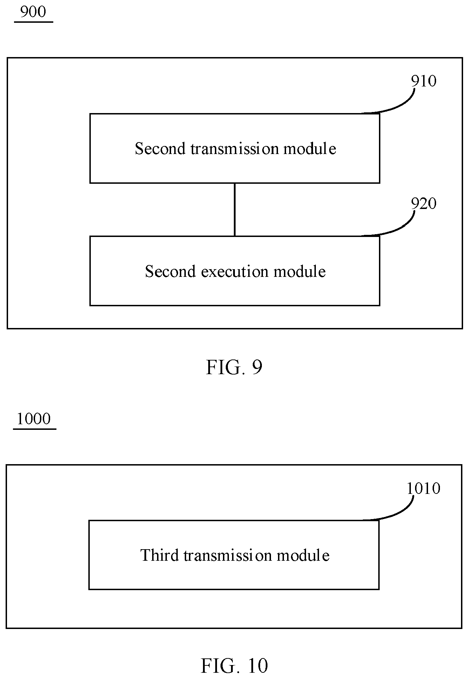

FIG. 9 is a schematic structural diagram of a consent data scheduling apparatus 900 according to an example embodiment of this application. The apparatus includes: a second transmission module 910 configured to receive a data request message sent by a second network element, where the data request message is used for requesting target data, the data request message includes at least consent information of a target user, and the target data is related data of the target user; and a second execution module 920 configured to perform a first operation based on the consent information of the target user, where the first operation includes refusing to provide the target data to the second network element or sending the target data to the second network element.

Optionally, the consent information of the target user includes at least one of the following: fifteenth information for indicating whether the target user agrees or disagrees with data processing, where the data processing includes at least one of data obtaining, data usage, data storage, and data sharing; sixteenth information for indicating a consent usage range; seventeenth information for indicating a consent usage time; and eighteenth information for indicating a consent storage time.

Optionally, the second execution module 920 is further configured to: determine whether the second network element is trustworthy or untrustworthy; and in a case that the second network element is trustworthy, perform the step of performing a first operation based on the consent information of the target user; or in a case that the second network element is untrustworthy, ignore the consent information of the target user included in the data request message and re-obtain consent information of the target user from a third network element, or refuse the data request message and send a third response message to the second network element, where the third response message includes at least a reason why the first network element refuses the data request message.

Optionally, the second execution module 920 is configured to: obtain the consent information of the target user from the third network element; determine whether the consent information of the target user included in the data request message matches the consent information of the target user obtained from the third network element; and in a case of match, determine that the second network element is trustworthy; or in a case of mismatch, determine that the second network element is untrustworthy.

Optionally, the second execution module 920 is configured to: in a case that the consent information of the target user indicates that the target user disagrees with data processing for the target data, send a fourth response message to the second network element; where the fourth response message is used to at least indicate to the second network element that the first network element refuses or stops provision of the target data.

Optionally, the fourth response message includes at least one of the following: nineteenth information for indicating that the first network element refuses or stops provision of the target data to the second network element; twentieth information for indicating a reason why the first network element refuses or stops provision of the target data; twenty-first information for indicating the second network element to cancel or delete a subscription request for the target data; and twenty-second information for indicating a waiting time before the second network element requests for the target data from the first network element again.

Optionally, the second execution module 920 is configured to: in a case that the consent information of the target user indicates that the target user agrees with data processing for the target data, obtain the target data and send a fifth response message to the second network element; where the fifth response message includes at least the target data.

Optionally, the fifth response message further includes at least one of the following: twenty-third information for indicating a consent usage range; twenty-fourth information for indicating a consent usage time; and twenty-fifth information for indicating a consent storage time.

FIG. 10 is a schematic structural diagram of a consent data scheduling apparatus 1000 according to an example embodiment of this application. The apparatus includes a third transmission module 1010 configured to send a data request message to a first network element, where the data request message is used for requesting target data, the data request message includes at least consent information of a target user, and the target data is related data of the target user.

Optionally, the consent information of the target user includes at least one of the following: fifteenth information for indicating whether the target user agrees or disagrees with data processing, where the data processing includes at least one of data obtaining, data usage, data storage, and data sharing; sixteenth information for indicating a consent usage range; seventeenth information for indicating a consent usage time; and eighteenth information for indicating a consent storage time.

The consent data scheduling apparatuses 800 to 1000 in the embodiments of this application may be an apparatus, or a network-side device having an operating system. This is not specifically limited in the embodiments of this application.

The consent data scheduling apparatuses 800 to 1000 provided in the embodiments of this application can implement the processes implemented in the method embodiments in FIGs. 2 to 7, with the same technical effects achieved. To avoid repetition, details are not described herein again.

Further, an embodiment of this application further provides a network-side device, where the network-side device may include a processor and a communication interface, the communication interface is coupled to the processor, and the processor is configured to run a program or instructions so as to implement the steps of the methods according to the embodiments 200 to 700. This network-side device embodiment corresponds to the foregoing network-side device method embodiment. All processes and implementations in the foregoing method embodiment can be applicable to this network-side device embodiment, with the same technical effects achieved.

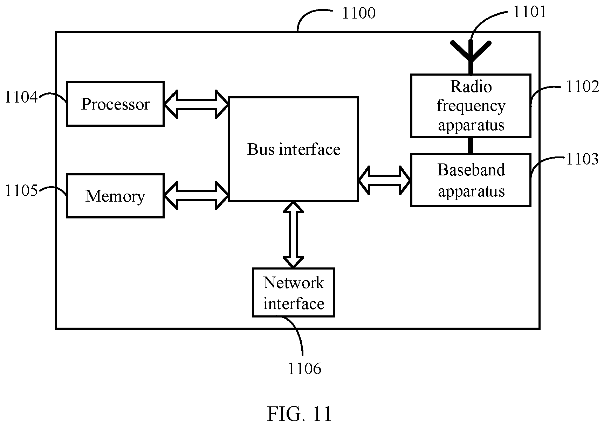

Specifically, an embodiment of this application further provides a network-side device. As shown in FIG. 11, the network-side device 1100 includes an antenna 1101, a radio frequency apparatus 1102, and a baseband apparatus 1103. The antenna 1101 is connected to the radio frequency apparatus 1102. Uplink, the radio frequency apparatus 1102 receives information through the antenna 1101, and sends the received information to the baseband apparatus 1103 for processing. Downlink, the baseband apparatus 1103 processes to-be-sent information, and sends the information to the radio frequency apparatus 1102; and the radio frequency apparatus 1102 processes the received information and then sends the information out through the antenna 1101.

The frequency band processing apparatus may be located in the baseband apparatus 1103. The method executed by the network-side device in the foregoing embodiments may be implemented in the baseband apparatus 1103, and the baseband apparatus 1103 includes a processor 1104 and a memory 1105.

The baseband apparatus 1103 may include, for example, at least one baseband board, where multiple chips are disposed on the baseband board. As shown in FIG. 11, one of the chips is, for example, the processor 1104, connected to the memory 1105, to invoke a program in the memory 1105 to perform the operation of the network shown in the foregoing method embodiment.

The baseband apparatus 1103 may further include a network interface 1106 configured to exchange information with the radio frequency apparatus 1102, where the interface is, for example, a common public radio interface (common public radio interface, CPRI for short).

Specifically, the network-side device in this embodiment of the present invention further includes an instruction or program stored in the memory 1105 and executable on the processor 1104. The processor 1104 invokes the instruction or program in the memory 1105 to execute the method executed by the modules shown in FIG. 8, 9, or 10, with the same technical effects achieved. To avoid repetition, details are not described herein again.

An embodiment of this application further provides a readable storage medium, where a program or instructions are stored in the readable storage medium, and when the program or instructions are executed by a processor, the processes of the foregoing consent data scheduling method embodiments are implemented, with the same technical effects achieved. To avoid repetition, details are not described herein again.

The processor is a processor in the terminal described in the foregoing embodiment. The readable storage medium includes a computer-readable storage medium, for example, a computer read-only memory (Read-Only Memory, ROM).

An embodiment of this application further provides a chip, where the chip includes a processor and a communication interface, the communication interface is coupled to the processor, and the processor is configured to run a program or instructions of a network-side device to implement the processes of the foregoing consent data scheduling method embodiments, with the same technical effects achieved. To avoid repetition, details are not described herein again.

It should be understood that the chip mentioned in this embodiment of this application may also be referred to as a system-level chip, a system chip, a chip system, a system-on-chip, or the like.

An embodiment of this application further provides a computer program product, where the computer program product includes a processor, a memory, and a program or instructions stored in the memory and executable on the processor, and when the program or instructions are executed by the processor, the processes in the foregoing consent data scheduling method embodiments are implemented, with the same technical effects achieved. To avoid repetition, details are not described herein again.

It should be noted that the terms "include", "comprise", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. Without more constraints, an element preceded by "includes a..." does not preclude the presence of other identical elements in the process, method, article, or apparatus that includes the element. In addition, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples may be combined in other examples.

Based on the above description of embodiments, persons skilled in the art can clearly understand that the method in the foregoing embodiments can be implemented through software on a necessary hardware platform or certainly through hardware only, but in many cases, the former is the more preferred implementation. Based on such an understanding, the technical solutions of this application essentially or the part contributing to the prior art may be implemented in a form of a computer software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A consent data scheduling method, comprising:
receiving, by a first network element, a data request message sent by a second network element, wherein the data request message is used for requesting target data, and the target data is related data, of a target user, stored in the first network element or in a data warehouse; and
performing, by the first network element, a first operation based on consent information of the target user, wherein the first operation comprises refusing to provide the target data to the second network element or sending the target data to the second network element.

2. The method according to claim 1, wherein before the step of performing, by the first network element, a first operation based on consent information of the target user, the method further comprises:
sending, by the first network element, a consent request message to a third network element based on the data request message, wherein the consent request message is used for obtaining the consent information of the target user.

3. The method according to claim 2, wherein the consent request message comprises at least one of the following:
at least one piece of identification information for indicating obtaining of the consent information of the target user corresponding to identification information;
requested user consent type information, wherein the user consent type comprises at least data sharing;
first time for indicating that the target data is data generated within the first time;
purpose information of obtaining the target data by the second network element;
first information for indicating a consent usage range;
second information for indicating a consent usage time; and
third information for indicating a consent storage time.

4. The method according to claim 2 or 3, wherein the consent information of the target user comprises at least one of the following:
fourth information for indicating whether the target user agrees or disagrees with data sharing;
fifth information for indicating a consent usage range;
sixth information for indicating a consent usage time; and
seventh information for indicating a consent storage time.

5. The method according to any one of claims 1 to 4, wherein the step of performing, by the first network element based on the consent information of the target user, refusing to provide the target data to the second network element comprises:
in a case that the consent information of the target user indicates that the target user disagrees with data sharing for the target data, sending, by the first network element, a first response message to the second network element; wherein
the first response message is used to at least indicate to the second network element that the first network element refuses or stops provision of the target data.

6. The method according to claim 5, wherein the first response message comprises at least one of the following:
eighth information for indicating that the first network element refuses or stops provision of the target data to the second network element;
ninth information for indicating a reason why the first network element refuses or stops provision of the target data;
tenth information for indicating the second network element to cancel or delete a subscription request for the target data; and
eleventh information for indicating a waiting time before the second network element requests for the target data from the first network element again.

7. The method according to claim 1, wherein the step of sending, by the first network element, the target data to the second network element based on the consent information of the target user comprises:
in a case that the consent information of the target user indicates that the target user agrees with data sharing for the target data, sending, by the first network element, a second response message to the second network element; wherein
the second response message comprises at least the target data.

8. The method according to claim 7, wherein the second response message further comprises at least one of the following:
twelfth information for indicating a consent usage range;
thirteenth information for indicating a consent usage time; and
fourteenth information for indicating a consent storage time.

9. The method according to any one of claims 1 to 8, wherein the method further comprises:
in a case that the target data is related data, of the target user, stored in the data warehouse, obtaining, by the first network element, the target data stored in the data warehouse.

10. A consent data scheduling method, comprising:
receiving, by a first network element, a data request message sent by a second network element, wherein the data request message is used for requesting target data, the data request message comprises at least consent information of a target user, and the target data is related data of the target user; and
performing, by the first network element, a first operation based on the consent information of the target user, wherein the first operation comprises refusing to provide the target data to the second network element or sending the target data to the second network element.

11. The method according to claim 10, wherein the consent information of the target user comprises at least one of the following:
fifteenth information for indicating whether the target user agrees or disagrees with data processing, wherein the data processing comprises at least one of data obtaining, data usage, data storage, and data sharing;
sixteenth information for indicating a consent usage range;
seventeenth information for indicating a consent usage time; and
eighteenth information for indicating a consent storage time.

12. The method according to claim 10, wherein before the step of performing, by the first network element, a first operation based on the consent information of the target user, the method further comprises:
determining, by the first network element, whether the second network element is trustworthy or untrustworthy; and
in a case that the second network element is trustworthy, performing, by the first network element, the step of performing the first operation based on the consent information of the target user; or
in a case that the second network element is untrustworthy, ignoring, by the first network element, the consent information of the target user comprised in the data request message and re-obtaining consent information of the target user from a third network element, or refusing, by the first network element, the data request message and sending a third response message to the second network element, wherein the third response message comprises at least a reason why the first network element refuses the data request message.

13. The method according to claim 12, wherein the step of determining, by the first network element, whether the second network element is trustworthy or untrustworthy comprises:
obtaining, by the first network element, the consent information of the target user from the third network element;
determining, by the first network element, whether the consent information of the target user comprised in the data request message matches the consent information of the target user obtained from the third network element; and
in a case of match, determining that the second network element is trustworthy; or
in a case of mismatch, determining that the second network element is untrustworthy.

14. The method according to any one of claims 10 to 13, wherein the step of performing, by the first network element based on the consent information of the target user, refusing to provide the target data to the second network element comprises:
in a case that the consent information of the target user indicates that the target user disagrees with data processing for the target data, sending, by the first network element, a fourth response message to the second network element; wherein
the fourth response message is used to at least indicate to the second network element that the first network element refuses or stops provision of the target data.

15. The method according to claim 14, wherein the fourth response message comprises at least one of the following:
nineteenth information for indicating that the first network element refuses or stops provision of the target data to the second network element;
twentieth information for indicating a reason why the first network element refuses or stops provision of the target data;
twenty-first information for indicating the second network element to cancel or delete a subscription request for the target data; and
twenty-second information for indicating a waiting time before the second network element requests for the target data from the first network element again.

16. The method according to any one of claims 10 to 13, wherein the step of sending, by the first network element, the target data to the second network element based on the consent information of the target user comprises:
in a case that the consent information of the target user indicates that the target user agrees with data processing for the target data, obtaining, by the first network element, the target data and sending a fifth response message to the second network element; wherein
the fifth response message comprises at least the target data.

17. The method according to claim 16, wherein the fifth response message further comprises at least one of the following:
twenty-third information for indicating a consent usage range;
twenty-fourth information for indicating a consent usage time; and
twenty-fifth information for indicating a consent storage time.

18. A consent data scheduling method, comprising:
sending, by a second network element, a data request message to a first network element, wherein the data request message is used for requesting target data, the data request message comprises at least consent information of a target user, and the target data is related data of the target user.

19. The method according to claim 18, wherein the consent information of the target user comprises at least one of the following:
fifteenth information for indicating whether the target user agrees or disagrees with data processing, wherein the data processing comprises at least one of data obtaining, data usage, data storage, and data sharing;
sixteenth information for indicating a consent usage range;
seventeenth information for indicating a consent usage time; and
eighteenth information for indicating a consent storage time.

20. A consent data scheduling apparatus, applied to a first network element, wherein the apparatus comprises:
a first transmission module, configured to receive a data request message sent by a second network element, wherein the data request message is used for requesting target data, and the target data is related data, of a target user, stored in the first network element or in a data warehouse; and
a first execution module, configured to perform a first operation based on consent information of the target user, wherein the first operation comprises refusing to provide the target data to the second network element or sending the target data to the second network element.

21. The apparatus according to claim 20, wherein the first transmission module is further configured to send a consent request message to a third network element based on the data request message, wherein the consent request message is used for obtaining the consent information of the target user.

22. The apparatus according to claim 21, wherein the consent request message comprises at least one of the following:
at least one piece of identification information for indicating obtaining of the consent information of the target user corresponding to identification information;
requested user consent type information, wherein the user consent type comprises at least data sharing;
first time for indicating that the target data is data generated within the first time;
purpose information of obtaining the target data by the second network element;
first information for indicating a consent usage range;
second information for indicating a consent usage time; and
third information for indicating a consent storage time.

23. The apparatus according to claim 21 or 22, wherein the consent information of the target user comprises at least one of the following:
fourth information for indicating whether the target user agrees or disagrees with data sharing;
fifth information for indicating a consent usage range;
sixth information for indicating a consent usage time; and
seventh information for indicating a consent storage time.

24. The apparatus according to any one of claims 20 to 23, wherein the first execution module is configured to: in a case that the consent information of the target user indicates that the target user disagrees with data sharing for the target data, send a first response message to the second network element; wherein
the first response message is used to at least indicate to the second network element that the first network element refuses or stops provision of the target data.

25. The apparatus according to claim 24, wherein the first response message comprises at least one of the following:
eighth information for indicating that the first network element refuses or stops provision of the target data to the second network element;
ninth information for indicating a reason why the first network element refuses or stops provision of the target data;
tenth information for indicating the second network element to cancel or delete a subscription request for the target data; and
eleventh information for indicating a waiting time before the second network element requests for the target data from the first network element again.

26. The apparatus according to claim 20, wherein the first execution module is further configured to: in a case that the consent information of the target user indicates that the target user agrees with data sharing for the target data, send a second response message to the second network element; wherein
the second response message comprises at least the target data.

27. The apparatus according to claim 26, wherein the second response message further comprises at least one of the following:
twelfth information for indicating a consent usage range;
thirteenth information for indicating a consent usage time; and
fourteenth information for indicating a consent storage time.

28. The apparatus according to any one of claims 20 to 27, wherein the first transmission module is further configured to: in a case that the target data is related data, of the target user, stored in the data warehouse, obtain the target data stored in the data warehouse.

29. A consent data scheduling apparatus, applied to a first network element, wherein the apparatus comprises:
a second transmission module, configured to receive a data request message sent by a second network element, wherein the data request message is used for requesting target data, the data request message comprises at least consent information of a target user, and the target data is related data of the target user; and
a second execution module, configured to perform a first operation based on the consent information of the target user, wherein the first operation comprises refusing to provide the target data to the second network element or sending the target data to the second network element.

30. The apparatus according to claim 29, wherein the consent information of the target user comprises at least one of the following:
fifteenth information for indicating whether the target user agrees or disagrees with data processing, wherein the data processing comprises at least one of data obtaining, data usage, data storage, and data sharing;
sixteenth information for indicating a consent usage range;
seventeenth information for indicating a consent usage time; and
eighteenth information for indicating a consent storage time.

31. The apparatus according to claim 29, wherein the second execution module is further configured to: determine whether the second network element is trustworthy or untrustworthy; and
in a case that the second network element is trustworthy, perform the step of performing the first operation based on the consent information of the target user; or
in a case that the second network element is untrustworthy, ignore the consent information of the target user comprised in the data request message and re-obtain consent information of the target user from a third network element, or refuse the data request message and send a third response message to the second network element, wherein the third response message comprises at least a reason why the first network element refuses the data request message.

32. The apparatus according to claim 31, wherein the second execution module is configured to: obtain the consent information of the target user from the third network element; determine whether the consent information of the target user comprised in the data request message matches the consent information of the target user obtained from the third network element; and in a case of match, determine that the second network element is trustworthy; or in a case of mismatch, determine that the second network element is untrustworthy.

33. The apparatus according to any one of claims 29 to 32, wherein the second execution module is configured to: in a case that the consent information of the target user indicates that the target user disagrees with data processing for the target data, send a fourth response message to the second network element; wherein
the fourth response message is used to at least indicate to the second network element that the first network element refuses or stops provision of the target data.

34. The apparatus according to claim 33, wherein the fourth response message comprises at least one of the following:
nineteenth information for indicating that the first network element refuses or stops provision of the target data to the second network element;
twentieth information for indicating a reason why the first network element refuses or stops provision of the target data;
twenty-first information for indicating the second network element to cancel or delete a subscription request for the target data; and
twenty-second information for indicating a waiting time before the second network element requests for the target data from the first network element again.

35. The apparatus according to any one of claims 29 to 32, wherein the second execution module is configured to: in a case that the consent information of the target user indicates that the target user agrees with data processing for the target data, obtain the target data and send a fifth response message to the second network element; wherein
the fifth response message comprises at least the target data.

36. The apparatus according to claim 35, wherein the fifth response message further comprises at least one of the following:
twenty-third information for indicating a consent usage range;
twenty-fourth information for indicating a consent usage time; and
twenty-fifth information for indicating a consent storage time.

37. A consent data scheduling apparatus, applied to a second network element, wherein the apparatus comprises:
a third transmission module, configured to send a data request message to a first network element, wherein the data request message is used for requesting target data, the data request message comprises at least consent information of a target user, and the target data is related data of the target user.

38. The apparatus according to claim 37, wherein the consent information of the target user comprises at least one of the following:
fifteenth information for indicating whether the target user agrees or disagrees with data processing, wherein the data processing comprises at least one of data obtaining, data usage, data storage, and data sharing;
sixteenth information for indicating a consent usage range;
seventeenth information for indicating a consent usage time; and
eighteenth information for indicating a consent storage time.

39. A network-side device, comprising a processor, a memory, and a program or instructions stored in the memory and executable on the processor, wherein when the program or instructions are executed by the processor, the steps of the consent data scheduling method according to any one of claims 1 to 9 are implemented, the steps of the consent data scheduling method according to any one of claims 10 to 17 are implemented, or the steps of the consent data scheduling method according to claim 18 or 19 are implemented.

40. A readable storage medium, wherein a program or instructions are stored in the readable storage medium, and when the program or instructions are executed by a processor, the steps of the consent data scheduling method according to any one of claims 1 to 9 are implemented, the steps of the consent data scheduling method according to any one of claims 10 to 17 are implemented, or the steps of the consent data scheduling method according to claim 18 or 19 are implemented.
